# EUROPÄISCHE PATENTANMELDUNG

(11) **EP 1 641 300 A1**
(43) Veröffentlichungstag der Anmeldung: **29.03.2006**
(21) Anmeldenummer: 04022723.3
(22) Anmeldetag: 23.09.2004
(51) Int. Cl.: H04Q 7/38, H04L 12/28

(54) **Verfahren zur Datenübertragung in einem Funk-Kommunikationssystem**

(71) Anmelder: SIEMENS AKTIENGESELLSCHAFT, 80333 München (DE)
(72) Erfinder: Sommer, Volker, Dr., 13503 Berlin (DE)

(57) **Zusammenfassung**

Erfindungsgemäß werden Informationen bezüglich einer Position eines Teilnehmer-Endgerätes von einem ersten Funk-Kommunikationssystem ermittelt; die ermittelten Informationen werden einem zweiten Funk-Kommunikationssystem zur Verfügung gestellt, und die Informationen werden von dem zweiten Funk-Kommunikationssystem für eine Übertragung von Daten zu dem Teilnehmer-Endgerät berücksichtigt.

## Beschreibung

Die Erfindung bezieht sich auf ein Verfahren zur Datenübertragung sowie ein entsprechendes Funk-Kommunikationssystem zum Durchführen eines derartigen Verfahrens.

In Funk-Kommunikationssystemen erfolgt eine Kommunikation zwischen beteiligten Stationen mittels elektromagnetischer Wellen über eine Funkschnittstelle. Je nach Funk-Kommunikationssystem können einzelne oder alle Teilnehmer-Endgeräte dabei stationär oder mobil sein. Funk-Kommunikationssysteme, die eine Mobilität von Teilnehmer-Endgeräten unterstützen, werden allgemein auch als Mobilfunksysteme bezeichnet. Es existieren Mobilfunksysteme unterschiedlicher Mobilfunkstandards, beispielsweise der zweiten Generation, wie IS-95 und GSM (Global System for Mobile Communication), oder der dritten Generation, wie beispielsweise CDMA2000 und UMTS (Universal Mobile Telecommunications System).

Zusätzlich zu diesen auf einer Mobilität der Teilnehmer-Endgeräte basierenden Funk-Kommunikationssystemen sind zukünftig weitere Systeme vorgesehen, die vorwiegend eine hochratige Datenübertragung zu stationären bzw. quasi-stationären Teilnehmer-Endgeräte sicherstellen sollen. Ein für eine derartige Anwendung ausgestaltetes System basiert beispielsweise auf dem so genannten WIMAX-Standard (Worldwide Interoperability for Microwave Access), der im Rahmen der IEEE als Standard 802.16 spezifiziert wird. Einen Überblick über diesen Standard sowie dessen Anwendung sind beispielsweise dem Artikel "Wireless-Standard für den Breitband-Access" von Gerhard Lesch, Funkschau 10-11/2004, S. 44-47, zu entnehmen. Neben einer im Vergleich zu bekannten WLAN-Systemen (Wireless Local Area Network) basierend auf dem Standard IEEE 802.11 größeren Reichweite von bis zu 50 Kilometern werden für WIMAX-Systeme deutlich höhere Übertragungsgeschwindigkeiten von bis zu 70 Mbit/s angestrebt. Dafür werden Frequenzbänder im Frequenzspektrum von 10 bis 66 GHz genutzt. Primäres Einsatzgebiet des WIMAX-Standards ist eine Überbrückung der so genannten letzten Meile zwischen Netzbetreiber und Endanwender, also im Sinne einer stationären Breitbandanbindung bzw. einem Festnetzanschluss für den drahtlosen Internetzugriff. Das derzeit spezifizierte System unterstützt noch keine Roamingfunktion der Teilnehmer-Endgeräte, d.h. bei Verlassen einer Funkzelle wird eine bestehende Verbindung abgebrochen. Eine Handover-Funktionalität, also eine aufgrund einer Bewegung des Teilnehmers durchgeführte Übergabe einer Verbindung von einer zu einer nächsten Funkzelle, soll jedoch zukünftig im Rahmen der so genannten 802.16e-Spezifikation Teil des WIMAX-Standards werden.

Eine Interoperabilität der bekannten digitalen Mobilfunksysteme der zweiten bzw. dritten Generation mit derartigen drahtlosen Zugangssystem erscheint sinnvoll, um sowohl eine Mobilität der Teilnehmer als auch hochdatenratige Applikationen effizient zu unterstützen. Jedoch ist eine gemeinsame Nutzung nur in Gebieten möglich, in denen drahtlose Zugangssysteme verfügbar sind, welches zumindest zu Beginn des Aufbaus derartiger Systeme nicht flächendeckend der Fall sein wird.

Allgemein ist bekannt, dass Teilnehmer-Endgeräte, die in zwei unterschiedlichen Systemen Verbindungen zur Datenübertragung aufbauen und auslösen können, Messungen von Basisstationen dieser Systeme durchführen, um eine netzseitige Steuerung einer Verbindungsweitergabe ohne Unterbrechung von einem aktuell versorgenden ersten System zu einem zukünftig versorgenden zweiten System zu unterstützen. Eine Verbindungsweiterschaltung zwischen zwei Systemen wird auch als Intersystem-Handover bezeichnet. Ein Intersystem-Handover wird beispielsweise durchgeführt, wenn sich ein Teilnehmer-Endgerät, das aktuell zu einem UMTS-basierten Mobilfunksystem eine Gesprächsverbindung aufgebaut hat, der Grenze des Versorgungsbereichs dieses Systems nähert, und eine Übergabe der Gesprächsverbindung zu einem GSM-basierten Mobilfunksystem erforderlich wird, um einen Abbruch der Verbindung zu vermeiden. In diesem Fall muss das Teilnehmer-Endgerät vor Erreichen der Funkzellgrenze der aktuell versorgenden Basisstation des UMTS-Mobilfunksystems bereits benachbarte Basisstationen des GSM-Mobilfunksystems bezüglich Funkübertragungseigenschaften ausmessen und eine geeignete Basisstation für die unterbrechungsfreie Weiterführung der Verbindung auswählen. Dabei wird dem Teilnehmer-Endgerät von der aktuell versorgenden Basisstation über Systeminformationen eine jeweils aktuelle Liste mit benachbarten Basisstationen signalisiert, dessen Funkübertragungseigenschaften das Teilnehmer-Endgerät ausmisst und zu der versorgenden Basisstation signalisiert, sodass systemseitig eine Entscheidung über eine Verbindungsweiterschaltung zu einer geeigneten Basisstation des GSM-Mobilfunksystems getroffen werden kann.

Im Gegensatz zu diesen bekannten Mobilfunksystemen, bei denen zumindest ein Signalisierungskanal mit allgemeinen Systeminformationen, dem so genannten Broadcast Channel (BCH), omnidirektional von den Basisstationen abgestrahlt wird und somit in der gesamten Funkzelle dieser Basisstation für Teilnehmer-Endgeräte empfangbar ist, werden die oben genannten drahtlosen Zugangssysteme, wie beispielsweise das WIMAX-System, zur Erzielung der angestrebten hohen Datenraten vorwiegend auf gerichteten Aussendungen basieren. Dies kann beispielsweise durch Einsatz so genannter intelligenter Antennen (engl. smart antenna) oder einer Sektorisierung der Funkzelle erfolgen. Aufgrund dieser gerichteten Abstrahlcharakteristik kann jedoch der Fall auftreten, dass sich ein Teilnehmer-Endgerät zwar in dem Versorgungsbereich einer Basisstation dieses Systems aufhält, Signale der Basisstation jedoch nicht empfangen kann, da diese aktuell nicht in Richtung des Teilnehmer-Endgerätes Signale aussendet. Selbst wenn das Teilnehmer-Endgerät Informationen über die Funkzelle des drahtlosen Zugangssystems von der aktuell versorgenden Basisstation des Mobilfunksystems erhält, beispielsweise in Form einer Liste über Nachbarbasisstationen, so kann es beispielsweise zwecks einer Verbindungsweiterschaltung jedoch gegebenenfalls keine Messungen der Basisstation des drahtlosen Zugangssystems durchführen und die Basisstation damit nicht als potenzielle Basisstation zur Übernahme der Verbindung auswählen. In Folge dessen kann nachteilig eine Verbindungsunterbrechung bzw. ein Verbindungsabbruch auftreten.

Aufgabe der Erfindung ist es daher, ein Verfahren sowie ein Funk-Kommunikationssystem anzugeben, die eine effiziente Interoperabilität zweier vergleichbar oben beschriebener Systeme ermöglichen. Diese Aufgabe wird durch die Merkmale der unabhängigen Patentansprüche gelöst. Vorteilhafte Weiterbildungen der Erfindung sind den abhängigen Patentansprüchen entnehmbar.

Erfindungsgemäß wird vorgeschlagen, dass von einem ersten Funk-Kommunikationssystem Informationen bezüglich einer Position eines Teilnehmer-Endgerätes ermittelt werden, und dass diese ermittelten Informationen von einem zweiten Funk-Kommunikationssystem für eine Übertragung von Daten zu dem Teilnehmer-Endgerät berücksichtigt werden.

Auf die einleitend beschriebene Situation eines Mobilfunksystems und eines drahtlosen Zugangssystems beispielhaft abgebildet, würde beispielsweise für ein Teilnehmer-Endgerät, welches aktuell von einer Basisstation eines GSM- oder UMTS-Mobilfunksystems versorgt wird, bei einer Verbindungsübergabe oder einem angestrebten Aufbau eines weiteren Dienstes zu einem WIMAX-System, eine aktuelle Position von dem versorgenden GSM- oder UMTS-Mobilfunksystem ermittelt werden. Diese Positionsbestimmung kann dabei mittels bekannter Verfahren, wie beispielsweise A-GPS (Assisted Global Positioning System), oder auch lediglich auf Basis einer Funkzellidentifikation (Cell-ID) der aktuell versorgenden Funkzelle, wie sie in bekannten Mobilfunksysteme eingesetzt werden, erfolgen.

Sofern nach einer vorteilhaften Ausgestaltung der Erfindung ermittelt wird, dass sich das Teilnehmer-Endgerät in einem Versorgungsbereich des zweiten Funk-Kommunikationssystems aufhält, wird die Information über die aktuelle Position des Teilnehmer-Endgerätes dem zweiten Funk-Kommunikationssystem zur Verfügung gestellt.

Bezugnehmend auf vorangehendes Beispiel erfolgt diese Ermittlung innerhalb des GSM- oder UMTS-Mobilfunksystems, welches Informationen über einen theoretischen Versorgungsbereich des WIMAX-Systems, beispielsweise in einer Datenbasis, vorhält, und mit den aktuell bestimmten Informationen zu der Position des Teilnehmer-Endgerätes abgleicht. Sofern als Ergebnis dabei ermittelt wird, dass das Teilnehmer-Endgerät von dem WIMAX-System bzw. einer Basisstation des WIMAX-Systems versorgt werden könnte, wird dem WIMAX-System von dem GSM- bzw. UMTS-System signalisiert, dass das Teilnehmer-Endgerät einen Verbindungsaufbau zu dem WIMAX-System anstrebt. Diese Signalisierung kann dabei in der Form erfolgen, dass dem WIMAX-System direkt die aktuellen Positions-Informationen signalisiert werden, oder dass zunächst lediglich ein Statusanzeiger übermittelt wird und daraufhin von dem WIMAX-System die Übermittlung der Positions-Informationen von dem GSM- bzw. UMTS-System angefordert wird.

Nach einer weiteren Ausgestaltung der Erfindung verändert das zweite Funk-Kommunikationssystem auf Basis der Informationen bezüglich der Position des Teilnehmer-Endgerätes den aktuell mit funktechnischen Ressourcen versorgten Bereich derart, dass das Teilnehmer-Endgerät mit diesen funktechnischen Resourcen versorgbar ist. Dies ist insbesondere vorteilhaft, wenn sich das Teilnehmer-Endgerät in einem Bereich des zweiten Funk-Kommunikationssystems aufhält, der aktuell nicht versorgt wird.

Im Kontext des vorangehenden Beispiels erfolgt eine derartige Veränderung beispielsweise mittels einer Ansteuerung adaptiver Antennen einer Basisstation des WIMAX-Systems zur Veränderung einer Richtcharakteristik des versorgenden Strahls (engl. Beam) in Richtung des Teilnehmer-Endgerätes oder einer Ansteuerung einer zuvor nicht aktiven Sektorantenne. Alternativ hierzu ist jedoch auch eine Veränderung der lokalen Ausdehnung der Funkzelle der WIMAX-Basisstation durch eine lokal begrenzte Erhöhung der Sendeleistung zur Versorgung des Teilnehmer-Endgerätes denkbar.

Weiteren Ausgestaltungen der Erfindung zufolge wird von dem zweiten Funk-Kommunikationssystem innerhalb des versorgten Bereichs ein Kanal mit allgemeinen Informationen des zweiten Funk-Kommunikationssystems ausgesendet, sodass dieser von dem Teilnehmer-Endgerät empfangbar ist. Anschließend wird von dem diese allgemeinen Informationen empfangenden Teilnehmer-Endgerät auf Basis der Informationen ein Zugriff auf das zweite Funk-Kommunikationssystem gesteuert.

In Weiterführung des vorherigen Beispiels ist ein allgemeiner Signalisierungskanal, beispielsweise in der Art eines so genannten Broadcast Channels (BCH), durch die Ausrichtung des Funkstrahls bzw. der Veränderung der Form der Funkzelle nunmehr für das Teilnehmer-Endgerät empfangbar, sodass dieses sich auf die Zeitstruktur des WIMAX-System synchronisieren und nachfolgend Messungen von Übertragungseigenschaften zu der Basisstation des WIMAX-Systems durchführen kann.

Sofern auf Basis der durchgeführten Messungen eine positive Entscheidung über einen Verbindungsaufbau zu dem WIMAX-System getroffen wurde, wird dies dem WIMAX-System von dem GSM- bzw. UMTS-System signalisiert, sodass das WIMAX-System eine Verbindungsaufbauprozedur zu dem Teilnehmer-Endgerät initiieren kann. Alternativ zu einem seitens des WIMAX-Systems initiierten Verbindungsaufbaus ist jedoch in gleicher Weise ein Zugriffsversuch durch das Teilnehmer-Endgerät auf das WIMAX-System denkbar. In jedem Fall können Aussendungen des Teilnehmer-Endgerätes, sei es in dem Frequenzband des GSM- bzw. UMTS-Systems oder in dem Frequenzband des WIMAX-Systems, von dem WIMAX-System dazu genutzt werden, eine Feinjustierung der Ausrichtung des Funkstrahls zu dem Teilnehmer-Endgerät durchzuführen.

Das erfindungsgemäße Funk-Kommunikationssystem weist Einrichtungen auf, die eine Realisierung des vorangehend beschriebenen erfindungsgemäßen Verfahrens ermöglichen.

Nachfolgend wird die Erfindung anhand von in den Figuren dargestellten Ausführungsbeispielen näher beschrieben. Dabei zeigen
- FIG 1: Basisstationen zweier Funk-Kommunikationssysteme mit beispielhaften Versorgungsgebieten,
- FIG 2: die Situation der FIG 1 mit einer zusätzlichen Ausrichtung eines Funkstrahls auf ein Teilnehmer-Endgerät, und
- FIG 3: ein Ablaufdiagramm des erfindungsgemäßen Verfahrens.

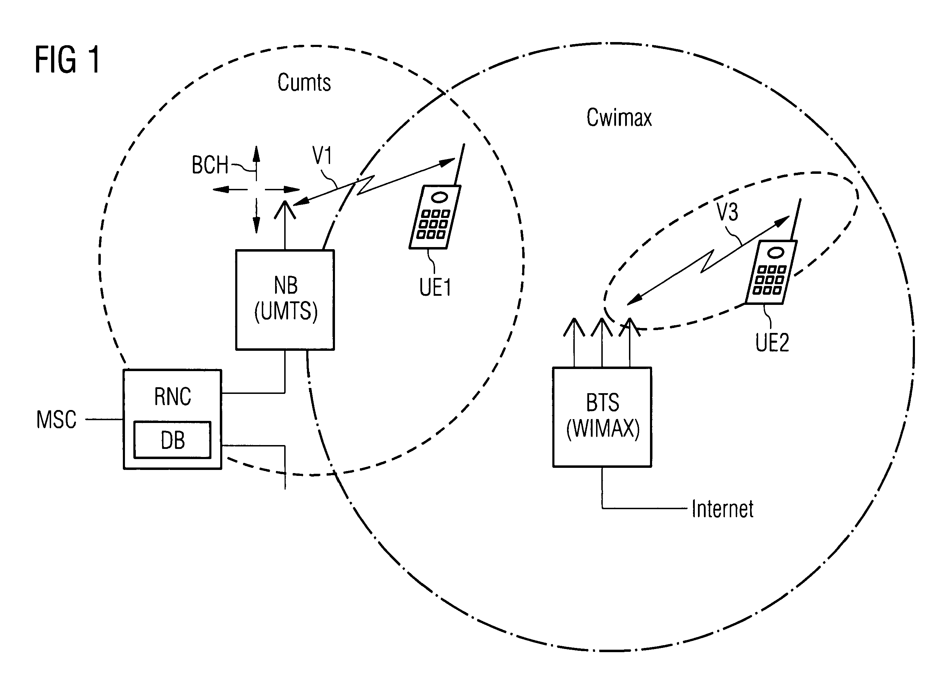

In der FIG 1 sind beispielhaft Basisstationen NB, BTS zweier Funk-Kommunikationssysteme dargestellt, die einen jeweiligen geographischen Bereich mit funktechnischen Ressourcen versorgen. Es sei dabei angenommen, dass die erste Basisstation NB (Node B) einen UMTS-basierten Standard für die Funk-Kommunikation unterstützt, währenddessen die zweite Basisstation BTS (Base Transceiver Station) einen einleitend beschriebenen WIMAX-Standard für die Funk-Kommunikation mit Teilnehmer-Endgeräten UE (User Equipment) nutzt. Die nachfolgenden Ausführungen sind jedoch nicht auf diese beispielhaft genannten Systeme beschränkt, sondern können allgemein in vergleichbaren aktuellen und zukünftigen Funk-Kommunikationssystemen verwirklicht werden.

Die erste Basisstationen NB versorgt beispielhaft mittels einer omnidirektionalen Abstrahlung eine Funkzelle Cumts mit funktechnischen Ressourcen. Die Größe der versorgten Funkzelle Cumts wird in der Regel abhängig von einer Reichweite eines allgemeinen Signalisierungskanals BCH (Broadcast Channel) definiert, wobei ein derartiger Signalisierungskanal mit einer vergleichsweise hohen und konstanten Sendeleistung von der Basisstation NB ausgesendet wird, um auch für Teilnehmer-Endgeräte an den Funkzellgrenzen empfangbar zu sein. In dem dargestellten Beispiel besteht zwischen der Basisstation NB und einem ersten Teilnehmer-Endgerät UE1 eine erste Verbindung V1, in der Informationen bzw. Daten über die Funkschnittstelle ausgetauscht werden. Die erste Basisstation NB ist über eine Basisstationssteuerung RNC (Radio Network Controller) mit einer Vermittlungseinrichtung MSC (Mobile Switching Center) und in der Regel einem - nicht dargestellten - Paketvermittlungsknoten des Funk-Kommunikationssystems verbunden, die wiederum einen Zugang zu öffentlichen Telekommunikationsnetzen und dem Internet gewährleisten. Diese Komponenten sind aus dem Stand der Technik beispielsweise der GSM- oder UMTS-basierten Systeme hinreichend bekannt.

Neben der Funkzelle Cumts der ersten Basisstation NB befindet sich das erste Teilnehmer-Endgerät UE1 ebenfalls in einem Versorgungsbereich bzw. einer Funkzelle Cwimax der zweiten Basisstation BTS. Diese, durch eine strichpunktierte Linie beispielhaft dargestellte Funkzelle Cwimax wird von der zweiten Basisstation BTS jedoch im Gegensatz zu der Funkzelle Cumts der ersten Basisstation NB nicht permanent mittels einer omnidirektionalen Abstrahlung mit funktechnischen Ressourcen versorgt. Vielmehr nutzt die zweite Basisstation BTS bedarfsabhängig gesteuerte gerichtete Abstrahlungen mittels beispielsweise bekannter intelligenter Antennensysteme. Dies ist beispielhaft für die Versorgung eines zweiten Teilnehmer-Endgerätes UE2 dargestellt, zu dem die zweite Basisstation BTS einen durch eine gestrichelte Linie dargestellten Funkstrahl ausgerichtet hat und eine dritte Verbindung V3 zur Übertragung von Signalen bzw. Daten über die Funkschnittstelle besteht. Die zweite Basisstation BTS ist somit zwar allgemein in der Lage, die gesamte Funkzelle Cwimax mit funktechnischen Ressourcen zu versorgen, jedoch erfolgt dies bedarfsabhängig zu nicht deterministischen Zeitpunkten. Eine gerichtete Abstrahlung besitzt dabei insbesondere den Vorteil einer geringeren Interferenzbelastung weiterer Funkübertragungen und ermöglicht hierdurch vorteilhaft eine Erhöhung der erzielbaren Übertragungsgeschwindigkeit und -kapazität. In dem Beispiel der FIG 1 ist die zweite Basisstation BTS direkt mit dem Internet verbunden, eine Anbindung der zweite Basisstation BTS über eine übergeordnete Einrichtung, beispielsweise ein Paketdatenströme zu einer Anzahl zugeordneter Basisstationen verteilender Router des WIMAX-Systems, ist jedoch in gleicher Weise realisierbar.

In gleicher Weise ist eine - nicht dargestellte - Realisierung mittels so genannter Sektorantennen denkbar, wobei eine Anzahl von Sektorantennen beispielsweise jeweils einen Winkel von 120° versorgen und somit die gesamte Funkzelle, d.h. 360°, mittels drei Sektorantennen ausgeleuchtet werden kann. In der vorangehend beschriebenen Ausgangssituation würde aktuell nur der Sektor, in dem sich das zweite Teilnehmer-Endgerät UE2 aufhält, durch eine Sektorantenne versorgt werden, in den weiteren Sektoren jedoch keine Ausstrahlung durch die Sektorantennen erfolgen.

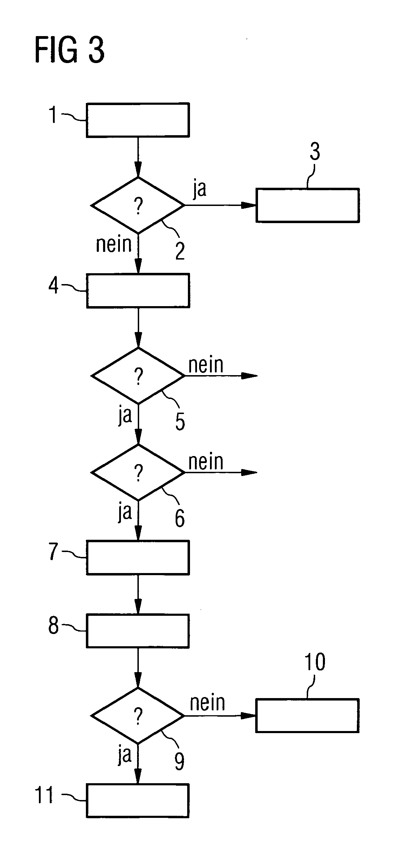

Wie nachfolgend bezugnehmend auf FIG 3 beschrieben wird, wird nach einer Entscheidung über einen Verbindungsaufbau zu dem WIMAX-System, beispielsweise zwecks eines Aufbaus eines hochdatenratigen Dienstes, welcher von der aktuell versorgenden ersten Basisstation NB des UMTS-Systems nicht zur Verfügung gestellt werden kann, eine aktuelle Position bzw. ein Aufenthaltsort des ersten Teilnehmer-Endgerätes UE1 durch bekannte Verfahren in dem UMTS-basierten System ermittelt, sofern diese Information nicht bereits vor der Entscheidung über den Verbindungsaufbau verfügbar ist.

Anschließend wird auf Basis von Informationen über den theoretischen Versorgungsbereich der zweiten Basisstation BTS des WIMAX-Systems bzw. der Funkzelle Cwimax bestimmt, ob das erste Teilnehmer-Endgerät UE1 durch die zweite Basisstation BTS mit funktechnischen Ressourcen versorgt werden kann. Hierzu ist in der Basisstationssteuerung RNC des UMTS-Systems eine Datenbasis DB verwirklicht, in der entsprechende Informationen über den Versorgungsbereich der zweiten Basisstation BTS hinterlegt sind. Diese Datenbasis DB kann alternativ in gleicher Weise in der ersten Basisstation NB oder aber in der Mobilvermittlungsstelle MSC des UMTS-Systems verwirklicht sein. Sofern die Funkzelle Cumts der ersten Basisstation NB vollständig von der Funkzelle Cwimax der zweiten Basisstation BTS überdeckt wird, würde in diesem Fall in der Datenbasis lediglich die Funkzellidentifikation (Cell-ID) der Funkzelle Cumts einer Funkzellidentifikation der Funkzelle Cwimax bzw. einer Basisstationsidentifikation der zweiten Basisstation BTS zugeordnet. Entsprechend würde bei Feststellen, dass sich das erste Teilnehmer-Endgerät UE1 in der Funkzelle Cumts des UMTS-Systems aufhält, als nutzbare Funkzelle bzw. Basisstation des WIMAX-Systems die Funkzelle Cwimax bzw. zweite Basisstation BTS für einen Verbindungsaufbau ausgewählt werden.

Falls mehr als eine Funkzelle des WIMAX-Systems für die Versorgung des erstes Teilnehmer-Endgerätes UE1 in Frage kommen würden, so wird auf Basis von beispielsweise aktuellen Last-, Qualitäts- und/oder Bewegungskriterien eine Auswahl einer am besten geeigneten Funkzelle. Insbesondere bei Berücksichtigung der Bewegung des ersten Teilnehmer-Endgerätes UE1 sollte dabei eine möglichst lange Aufenthaltsdauer in einer ausgewählten Funkzelle angestrebt werden, um die Anzahl erforderlicher Verbindungsweiterschaltungen zwischen Funkzellen, soweit dies nach dem unterstützten Standard überhaupt möglich ist, zu minimieren.

Nach positiver Feststellung, dass das erste Teilnehmer-Endgerät UE1 durch die zweite Basisstation BTS versorgbar ist, wird seitens des UMTS-Systems dem WIMAX-System bzw. der zweiten Basisstation BTS signalisiert, dass das erste Teilnehmer-Endgerät UE1 einen Verbindungsaufbau zu der zweiten Basisstation BTS initiieren möchte. Die Übertragung von Informationen von dem UMTS- zu dem WIMAX-System kann dabei in der Weise ähnlich einem normalen Intersystem-Handover erfolgen. Die Signalisierung kann dabei beispielsweise eine Ortsinformation bezüglich des aktuellen Standortes des Teilnehmer-Endgerätes umfassen.

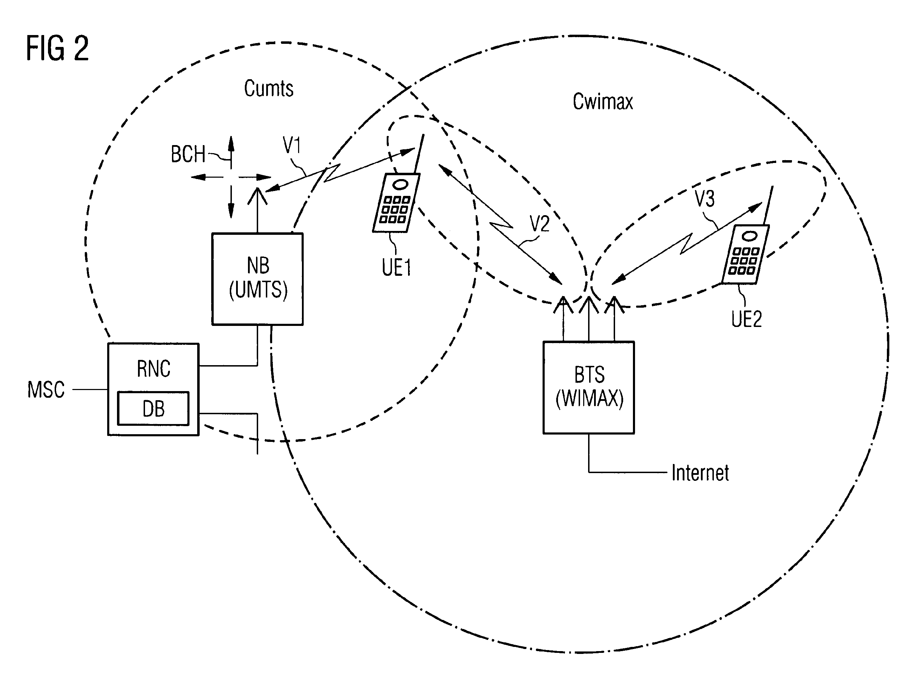

Da in dem beschriebenen Beispiel der FIG 1 das erste Teilnehmer-Endgerät UE1 keine Aussendungen der zweiten Basisstation BTS empfangen kann, richtet die zweite Basisstation BTS durch eine entsprechende Ansteuerung des intelligenten Antennensystems einen Funkstrahl auf das erste Teilnehmer-Endgerät UE1 aus, wie es beispielhaft in FIG 2 dargestellt ist. Diese Ausrichtung basiert dabei beispielsweise auf der zweiten Basisstation BTS signalisierten Informationen über die aktuelle Position des ersten Teilnehmer-Endgeräte UE1, wie sie von der UMTS-System ermittelt wurden. In der zweiten Basisstation BTS bzw. einer übergeordneten Komponente des WIMAX-Systems ist hierzu in gleicher Weise eine Datenbasis verwirklicht, in der beispielsweise bestimmten Positionsinformationen bestimmte Antennenparameter bzw. Sektorantennen zugeordnet sind. Diese Datenbasis kann auch anstelle der voran gehend beschriebenen Datenbasis in dem UMTS-System für die Ermittlung, ob das erste Teilnehmer-Endgerät UE1 von der zweiten Basisstation BTS mit funktechnischen Ressourcen versorgt werden kann, genutzt werden. In dem zur Versorgung des ersten Teilnehmer-Endgerätes UE1 gerichteten Funkstrahl sendet die zweite Basisstation BTS beispielsweise zunächst einen Signalisierungskanal im Sinne eines Broadcast Channels mit allgemeinen Systeminformationen aus.

Für den vorangehend beschriebenen alternativen Fall der Nutzung von Sektorantennen würde die zweite Basisstation BTS entsprechend den Sektor aktivieren bzw. mit funktechnischen Ressourcen versorgen, in dem sich das erste Teilnehmer-Endgerät UE1 aktuell aufhält. Sofern dieser Sektor beispielsweise die gesamte Funkzelle der ersten Basisstation NB abdeckt, wäre eine Signalisierung eines Hinweises, dass ein Teilnehmer-Endgerät in der Funkzelle der ersten Basisstation NB eine Verbindung aufbauen möchte, anstelle einer Signalisierung der genauen Position des ersten Teilnehmer-Endgerätes UE1 ausreichend. Dieser Hinweis könnte beispielsweise in Form einer Basisstationsidentifikation übermittelt werden.

Eine weitere Alternative wäre eine lokale Erhöhung der Sendeleistung in Richtung des ersten Teilnehmer-Endgerätes UE1 durch die zweite Basisstation BTS, wodurch der Versorgungsbereich der zweiten Basisstation BTS in Richtung des ersten Teilnehmer-Endgerätes UE1 erweitert würde.

Nachdem das erste Teilnehmer-Endgerät UE1 nunmehr in der Lage ist, Signale der zweiten Basisstation BTS bzw. des WIMAX-Systems zu empfangen, kann es sich auf die Zeitstruktur der zweiten Basisstation BTS synchronisieren und Signale in Aufwärtsrichtung zu der zweiten Basisstation BTS senden. Informationen über das von der zweiten Basisstation BTS genutzte Frequenzband bzw. Unterfrequenzbänder sowie gegebenenfalls weitere funktechnische, wie beispielsweise Kodierung, und/oder organisatorische Parameter werden dem ersten Teilnehmer-Endgerät UE1 zur zusätzlichen Beschleunigung des Verbindungsaufbaus beispielsweise zuvor von der ersten Basisstation NB signalisiert. Diese Signalisierung kann dabei über die so genannte User-Plane erfolgen, sodass für eine Implementierung dieser Signalisierung vorteilhaft keinerlei Änderungen des UMTS-Standards erforderlich wären. Zudem erfolgt ein Verbindungsaufbau zu dem WIMAX-System in der Regel nicht aufgrund eines bevorstehenden Abbruchs der bestehenden Verbindung zu dem UMTS-System, sodass keine Anforderungen an eine maximale erlaubte Verzögerung beim Aufbau der Verbindung zu dem WIMAX-System berücksichtigt werden müssen.

Für den Zugriff auf die zweite Basisstation BTS verwendet das erste Teilnehmer-Endgerät UE1 beispielsweise bekannte systemspezifische Zugriffssequenzen, in denen bereits ein bestimmter Dienst bzw. Dienstanforderungen signalisiert werden. Denkbar ist weiterhin, dass dem ersten Teilnehmer-Endgerät UE1 im Rahmen der Signalisierung oben genannter Parameter eine bestimmte zu nutzende Zugriffssequenz vorgegeben wird, die auch der zweiten Basisstation BTS signalisiert wird und in dieser dem ersten Teilnehmer-Endgerät zugeordnet ist. Hierdurch kann die zweite Basisstation BTS das erste Teilnehmer-Endgerät UE1 bei Empfang dieser Sequenz direkt identifizieren und entsprechend vorteilhaft den Verbindungsaufbau beschleunigen. Die Signale des ersten Teilnehmer-Endgerätes UE1 können beispielsweise auch Informationen darüber enthalten, dass das erste Teilnehmer-Endgerät UE1 die Signale der zweiten Basisstation BTS empfangen kann bzw. gemessene Qualitätsparameter bezüglich der empfangenen Signale der zweiten Basisstation BTS umfassen.

Die empfangenen Signale des ersten Teilnehmer-Endgerätes UE1 können ferner von der zweiten Basisstation BTS wiederum dazu genutzt werden, eine Feinjustierung der Richtcharakteristik der intelligenten Antennen in Richtung des ersten Teilnehmer-Endgerätes UE1 vorzunehmen, um zum einen die Übertragungsqualität zu erhöhen und zum anderen eine Interferenzbeeinflussung weiterer Verbindungen und Nachbarfunkzellen zu verringern. Alternativ oder ergänzend kann eine Feinjustierung jedoch auch in der Weise erfolgen, dass die zweite Basisstation einen Sendestrahl mit zeitlich variierenden Sendeparametern, wie beispielsweise Sendeleistung, Azimuthwinkel o.ä., generiert, und das erste Teilnehmer-Endgerät UE1 nach Ausmessen dieser zeitlich variierenden Sendestrahlen über das UMTS-System oder direkt zu der zweiten Basisstation BTS Rückmeldungen über die jeweiligen Empfangseigenschaften gibt. Dies kann beispielsweise unter Angabe eines Zeitstempels erfolgen, auf Basis dessen die zweite Basisstation BTS die zu diesem Zeitpunkt verwendeten Sendeparameter ermitteln und geeignete Sendeparameter für die weitere Signalübertragung zu dem ersten Teilnehmer-Endgerät UE1 auswählen kann.

Nach Empfangen der Zugriffssequenz des ersten Teilnehmer-Endgerätes UE1 wird seitens der zweiten Basisstation BTS bzw. des WIMAX-System eine zweite Verbindung V2 zu dem ersten Teilnehmer-Endgerät aufgebaut und in dieser Verbindung entsprechend dem Dienstwunsch Daten von/zu dem ersten Teilnehmer-Endgerät UE1 übertragen. Nach Aufbau der zweiten Verbindung V2 kann gegebenenfalls entschieden werden, ob die bestehende erste Verbindung V1 zwischen der ersten Basisstation NB und dem ersten Teilnehmer-Endgerät UE1 weiter aufrecht gehalten oder aber ausgelöst werden soll.

In der FIG 3 ist das vorangehend bereits zumindest teilweise beschriebene erfindungsgemäße Verfahren in Form eines Ablaufdiagramms dargestellt. Die im folgenden erläuterten einzelnen Schritte des Verfahrens gehen von einer Situation entsprechend der Beschreibung zu FIG 1 aus, gemäß der eine aktive erste Verbindung V1 zwischen dem ersten Teilnehmer-Endgerät UE1 und der ersten Basisstation NB des UMTS-Systems besteht. Gleiche Schritte sind entsprechend für eine Ausgangssituation, gemäß der das erste Teilnehmer-Endgerät UE1 aktuell keine Verbindung aufgebaut hat, sondern lediglich in der Funkzelle der ersten Basisstation NB eingebucht ist und sich in einem Ruhezustand befindet, durchführbar.

Fordert das erste Teilnehmer-Endgerät UE1 in einem Schritt 1 neben der bestehenden ersten Verbindung V1 einen hochdatenratigen Dienst, beispielsweise eine Übertragung eines Videostreams oder eines digitalen Fernsehprogramms, von dem aktuell versorgenden UMTS-System an, so wird in einem Schritt 2 zunächst in dem UMTS-System geprüft, ob diese Dienstanforderung von der ersten Basisstation NB bzw. weiteren Systemkomponenten erfüllt werden kann. Ist dies der Fall, so wird der gewünschte Dienst gemäß bekannter Mechanismen in Schritt 3 aufgebaut.

Sollte die Dienstanforderung jedoch nicht von dem UMTS-System erfüllt werden können, beispielsweise aufgrund einer nicht ausreichend zur Verfügung stehenden Übertragungskapazität auf der Funkschnittstelle zu dem ersten Teilnehmer-Endgerät UE1, so wird in Schritt 4 von dem UMTS-System eine aktuelle Position des ersten Teilnehmer-Endgerätes UE1 ermittelt, bzw. auf bekannte Positionsinformationen zugegriffen. Eine derartige Positionsbestimmung kann beispielsweise mittels bekannter Verfahren wie Assisted-GPS oder lediglich der Erfassung der Cell-ID erfolgen. Mit diesen Informationen über die Position des ersten Teilnehmer-Endgerätes UE1 erfolgt in Schritt 5 ein Abgleich mit Informationen über einen Versorgungsbereich benachbarter WIMAX-Basisstationen, die die Dienstanforderung potenziell erfüllen könnten. Dabei kann für die Auswahl einer geeigneten WIMAX-Funkzelle auch eine zu erwartende zukünftige Bewegung des ersten Teilnehmer-Endgerätes berücksichtigt werden, d.h. sollte sich das erste Teilnehmer-Endgerät UE1 innerhalb einer relativ kurzer Zeit aus dem Versorgungsbereich der benachbarten WIMAX-Funkzelle herausbewegen, so wäre ein Aufbau einer Verbindung zu der dieser Funkzelle zugeordneten zweiten Basisstation BTS nicht sinnvoll. Sollte ein Verbindungsaufbau zu dem WIMAX-System nicht möglich bzw. sinnvoll sein, so wird dies dem ersten Teilnehmer-Endgerät UE1 in einem nicht dargestellten Schritt signalisiert und gegebenenfalls dem Teilnehmer mitgeteilt.

Der Abgleich bzw. die Ermittlung einer geeigneten Funkzelle des WIMAX-Systems kann dabei alternativ in dem UMTS- oder dem WIMAX-System erfolgen, je nachdem, in welchem System die Informationen über den Versorgungsbereich der WIMAX-Funkzellen hinterlegt sind. Entsprechend müssen die Informationen zuvor dem den Abgleich durchführenden System von dem anderen System zur Verfügung gestellt werden.

Sofern sich aus dem Vergleich in Schritt 5 jedoch ergibt, dass das erste Teilnehmer-Endgerät UE1 potenziell von der zweiten Basisstation BTS mit funktechnischen Ressourcen versorgt werden kann, wird in Schritt 6 geprüft, ob die zweite Basisstation BTS den angeforderten Dienst zur Verfügung stellen kann. Diese Entscheidung basiert beispielsweise auf einer aktuell nutzbaren Übertragungskapazität und sollte daher vorzugsweise innerhalb des WIMAX-Systems getroffen werden.

Ist die zweite Basisstation BTS in der Lage, den angeforderten Dienst dem ersten Teilnehmer-Endgerät UE1 zur Verfügung zu stellen, so richtet die zweite Basisstation BTS in Schritt 7 die Funkversorgung, d.h. den Funkstrahl bzw. die Sektorantenne, entsprechend den Informationen zu der Position des ersten Teilnehmer-Endgerätes UE1 aus, und sendet beispielsweise einen Signalisierungskanal mit allgemeinen Systeminformationen in Richtung des ersten Teilnehmer-Endgerätes UE1 aus.

Das erste Teilnehmer-Endgerät UE1 wiederum empfängt in Schritt 8 nunmehr die Signale der zweiten Basisstation BTS, führt auf Basis dieser Signale eine Synchronisation auf die Zeitstruktur der zweiten Basisstation BTS sowie weitere Messungen bezüglich Übertragungseigenschaften der Funkschnittstelle durch, und sendet schließlich zumindest eine Zugriffssequenz in Aufwärtsrichtung zu der zweiten Basisstation BTS. Sofern dem WIMAX-System die Dienstanforderung des ersten Teilnehmer-Endgerätes UE1 nicht bekannt ist, signalisiert das erste Teilnehmer-Endgerät UE1 in der Zugriffssequenz zusätzlich Informationen bezüglich des aufzubauenden Dienstes, wobei diese Informationen beispielsweise eine Datenrate und/oder Dienstqualitätsparameter (QoS - Quality of Service) umfassen. Nach erfolgreichem Empfang der Zugriffssequenz wird über die zweite Basisstation BTS gemäß bekannter Mechanismen eine Verbindung V3 zu dem ersten Teilnehmer-Endgerät UE1 aufgebaut und entsprechend dem angeforderten Dienst Daten zu/von dem Teilnehmer-Endgerät UE1 in der Verbindung V3 übertragen.

Sofern die zweite Basisstation BTS ein intelligentes Antennensystem zur Versorgung von Teilnehmer-Endgeräten einsetzt, kann sie Aussendungen des ersten Teilnehmer-Endgerätes UE1 vorteilhaft dazu nutzen, den Funkstrahl entsprechend der Bewegung des ersten Teilnehmer-Endgerätes UE1 nachzuführen, sodass keine weiteren Positionsbestimmungen durch das UMTS-System zur Unterstützung der Verbindung V3 zu dem WIMAX-System erforderlich sind.

Nach Aufbau der Verbindung V3 zu der zweiten Basisstation BTS kann ergänzend in Schritt 9 in dem UMTS-System entschieden werden, ob die bestehende erste Verbindung V1 zu der ersten Basisstation NB aufrecht gehalten werden soll. Für den Fall, dass die erste Verbindung nicht aufrecht gehalten werden soll, wird in Schritt 10 die erste Verbindung ausgelöst, wohingegen für den Fall, dass die erste Verbindung weitergeführt werden soll, dies in Schritt 11 entsprechend erfolgt. Die Entscheidung über die Weiterführung der ersten Verbindung V1 hängt dabei beispielsweise von einem weiterhin aktiven Dienst, von einer weiterhin erforderlichen regelmäßigen Positionsbestimmung des ersten Teilnehmer-Endgerätes UE1 zur Unterstützung der Verbindung V3 zu dem WIMAX-System oder aber von einer Bewegung des Teilnehmer-Endgerätes, aufgrund dessen ein häufiger Wechsel der versorgenden Funkzelle gesteuert werden muss, ab.

Neben den genannten sind weitere Ausgestaltungen zur Realisierung des erfindungsgemäßen Verfahrens denkbar. Derartige, einem Fachmann auf dem Gebiet der Funk-Kommunikationstechnik nahe liegende Alternativen, sind in gleicher Weise als Teil der Offenbarung anzusehen.

## Patentansprüche

1. Verfahren zur Datenübertragung in einem Funk-Kommunikationssystem, bei dem
Informationen bezüglich einer Position eines Teilnehmer-Endgerätes (UE1) von einem ersten Funk-Kommunikationssystem (UMTS) ermittelt wird,
die ermittelten Informationen einem zweiten Funk-Kommunikationssystem (WIMAX) zur Verfügung gestellt werden, und
die Informationen von dem zweiten Funk-Kommunikationssystem (WIMAX) für eine Übertragung von Daten zu dem Teilnehmer-Endgerät (UE1) berücksichtigt werden.

2. Verfahren nach Anspruch 1, bei dem
vor der Berücksichtigung der Informationen für die Übertragung zu dem Teilnehmer-Endgerät (UE1) aus den Informationen ermittelt wird, ob sich das Teilnehmer-Endgerät (UE1) aktuell in einem Versorgungsbereich (Cwimax) des zweiten Funk-Kommunikationssystems (WIMAX) befindet.

3. Verfahren nach Anspruch 1 oder 2, bei dem
das zweite Funk-Kommunikationssystem (WIMAX) auf Basis der Informationen einen aktuell mit funktechnischen Ressourcen versorgten Bereich derart verändert, dass das Teilnehmer-Endgerät (UE1) mit funktechnischen Ressourcen versorgbar ist.

4. Verfahren nach einem vorhergehenden Anspruch, bei dem
das zweite Funk-Kommunikationssystem (WIMAX) einen Kanal mit allgemeinen Informationen des zweiten Funk-Kommunikationssystems (WIMAX) innerhalb des versorgten Bereichs aussendet, der von dem Teilnehmer-Endgerät (UE1) empfangen wird.

5. Funk-Kommunikationssystem, mit
- zumindest einer Basisstation (NB) zum Versorgen zumindest eines Teilnehmer-Endgerätes (UE1) mit funktechnischen Ressourcen,
- einer Einrichtung zum Ermitteln von Informationen bezüglich einer aktuellen Position des zumindest einen Teilnehmer-Endgerätes (UE1), und
- einer Einrichtung zum Weitergeben der ermittelten Informationen zu einem zweiten Funk-Kommunikationssystem (WIMAX) zur Berücksichtigung für eine Übertragung von Daten zu dem Teilnehmer-Endgerät (UE1) durch das zweite Funk-Kommunikationssystem (WIMAX).

6. Funk-Kommunikationssystem, mit
- einer Datenbasis (DB) zum Speichern von Informationen bezüglich eines Versorgungsbereiches (Cwimax) des zweiten Funk-Kommunikationssystems (WIMAX), und
- einer Einrichtung zum Vergleichen der ermittelten Informationen bezüglich der aktuellen Position des Teilnehmer-Endgerätes (UE1) mit den gespeicherten Informationen bezüglich des Versorgungsbereiches (Cwimax) des zweiten Funk-Kommunikationssystems (WIMAX), und zum Feststellen, ob sich das Teilnehmer-Endgerät (UE1) aktuell in dem Versorgungsbereich (Cwimax) des zweiten Funk-Kommunikationssystems (WIMAX) aufhält.
